# FASCICULE DE BREVET EUROPEEN

(11) **EP 3 851 719 B1**
(45) Date de publication et mention de la délivrance du brevet: **26.10.2022**
(21) Numéro de dépôt: 21151173.8
(22) Date de dépôt: 12.01.2021
(51) Int. Cl.: F16K 21/04, F16K 21/12

(54) **MECANISME EN FORME DE CARTOUCHE A FERMETURE AUTOMATIQUE TEMPORISEE POUR ROBINET MITIGEUR ET ROBINET MITIGEUR LE COMPRENANT**
KARTUSCHENFÖRMIGER MECHANISMUS MIT ZEITGESTEUERTEM AUTOMATISCHEN VERSCHLUSS FÜR MISCHERHAHN UND MISCHERHAHN
CARTRIDGE SHAPED MECHANISM WITH TIMED AUTOMATIC CLOSURE FOR MIXER TAP AND MIXER TAP INCLUDING IT

(30) Priorité: 14.01.2020 FR 2000319
(43) Date de publication de la demande: 21.07.2021
(73) Titulaire: Delabie, 80130 Friville Escarbotin (FR)
(72) Inventeur: DARRAS, Maxime, 80130 FRIVILLE-ESCARBOTIN (FR)
(74) Mandataire: Cabinet Chaillot

(56) Documents cités:
- FR-A- 330 315
- FR-A1- 2 734 334

## Description

La présente invention concerne le domaine des robinets mitigeurs tels que pour douche ou lavabo, et porte en particulier sur un mécanisme en forme de cartouche à fermeture automatique temporisée pour robinet mitigeur et sur un robinet mitigeur le comprenant.

Les robinets mitigeurs temporisés pour douche ou lavabo existants comprennent généralement, d'une part, un corps de forme sensiblement cylindrique dans lequel débouchent des arrivées d'eau froide et d'eau chaude et depuis lequel s'étend une sortie d'eau mitigée, et, d'autre part, un mécanisme en forme de cartouche, appelé par simplification dans ce qui suit cartouche, qui est inséré dans ce corps. Cette cartouche, amovible et interchangeable, est généralement surmontée d'un volant de commande, de type bouton-poussoir, commandant la sortie d'eau pendant un temps prédéterminé, l'ouverture du robinet étant obtenue en exerçant une poussée sur le volant de commande et la fermeture du robinet se produisant automatiquement au bout d'une certaine durée après que l'appui sur le volant de commande a été relâché. En outre, la rotation du volant de commande dans le sens horaire ou antihoraire permet à l'utilisateur de régler la température de l'eau mitigée.

De tels robinets mitigeurs sont surtout destinés aux collectivités et aux lieux publics, car ils permettent une économie d'eau. Cependant, la plupart de ces robinets ont pour inconvénient de pouvoir être maintenus ouverts en continu par un utilisateur peu scrupuleux, soit manuellement, soit par différents artifices, ceci annulant bien évidemment le principal avantage de ce robinet. Pour pallier cet inconvénient, on connaît des cartouches qui se ferment automatiquement même si on maintient une pression sur le volant de commande (par exemple, les demandes de brevet français FR330315A, FR334979A et FR2844021A1).

Il existe d'autres types de cartouches à fermeture automatique temporisée pour robinet mitigeur de lavabo ou de douche (par exemple, les demandes de brevet français FR2683606A1, FR2579714A1 et FR2410196A1). Cependant, ceux-ci ont généralement pour inconvénient de nécessiter un effort d'appui ou de rotation assez important sur le volant de commande pour commander l'ouverture du robinet et le réglage de la température de l'eau mitigée, ce qui les rend difficiles à activer pour les enfants et les personnes âgées. En outre, ces cartouches existantes comprennent de nombreux composants, ce qui aboutit à un coût de revient élevé et rend le démontage complexe en cas de maintenance.

La demande de brevet français FR2734334A1 divulgue aussi un robinet mitigeur connu.

La présente invention vise à résoudre les inconvénients de l'état antérieur de la technique, en proposant une cartouche à fermeture automatique temporisée pour robinet mitigeur comprenant un clapet auxiliaire permettant une décompression à l'intérieur de la cartouche afin de pouvoir actionner sans effort le volant de commande et un clapet secondaire qui ne s'ouvre que lorsqu'on relâche la poussée sur la volant de commande.

La présente invention a donc pour objet une cartouche à fermeture automatique temporisée pour un robinet mitigeur, tel qu'un robinet mitigeur pour douche ou lavabo, caractérisée par le fait qu'elle comprend : - un moyeu creux recevant une tige de commande creuse à ressort de rappel, l'extrémité supérieure de la tige de commande étant configurée pour recevoir un volant de commande de robinet ; - un pot de temporisation configuré pour être relié à une arrivée d'eau froide et à une arrivée d'eau chaude par l'intermédiaire d'au moins une ouverture d'entrée d'eau ; - une entretoise s'intercalant entre le moyeu creux et le pot de temporisation, la tige de commande s'étendant à travers l'entretoise pour déboucher à son extrémité inférieure dans le pot de temporisation et étant configurée pour coulisser dans ladite entretoise, au moins une ouverture de sortie d'eau étant ménagée dans la paroi latérale de la tige de commande au niveau de l'entretoise, au moins un passage latéral étant ménagé dans ladite entretoise pour permettre un écoulement d'eau depuis l'intérieur de la tige de commande creuse vers une sortie d'eau du robinet mitigeur, l'entretoise comportant une première partie supérieure dans laquelle la tige de commande est apte à coulisser et pivoter selon son axe longitudinal, ladite première partie supérieure étant configurée pour être maintenue dans le corps de robinet par un chapeau creux et une bague filetée configurée pour être vissée dans ledit corps de robinet, ladite bague filetée venant en appui sur le chapeau creux qui enveloppe la première partie supérieure de l'entretoise, ledit chapeau creux étant configuré pour être rendu solidaire en rotation du corps de robinet, l'entretoise comportant en outre une seconde partie inférieure de type entraîneur solidaire en rotation de la tige de commande, ledit entraîneur étant également solidaire en rotation du pot de temporisation et ; - un piston de temporisation disposé dans le pot de temporisation et configuré pour ouvrir et fermer un clapet principal situé au niveau de la partie supérieure du pot de temporisation ; - ledit clapet principal étant constitué par la face supérieure d'un joint à lèvre disposé sur le piston de temporisation et dont la lèvre s'applique sur la surface latérale intérieure du pot de temporisation, le siège principal associé au clapet principal étant formé par une jupe à l'extrémité inférieure de l'entretoise, l'extrémité inférieure de la tige de commande étant configurée pour permettre une circulation d'eau depuis le pot de temporisation vers l'au moins une ouverture de sortie d'eau de la tige de commande ; - un clapet auxiliaire porté par la partie inférieure d'un organe de décompression, ladite partie inférieure de l'organe de décompression étant disposée sous le piston de temporisation et la partie supérieure de l'organe de décompression étant creuse, traversant le piston de temporisation et s'étendant axialement dans la partie inférieure de la tige de commande creuse, le siège auxiliaire associé au clapet auxiliaire étant formé dans la partie intérieure du piston de temporisation, ledit clapet auxiliaire étant configuré pour être rappelé en position fermée par un ressort logé entre le fond du pot de temporisation et la partie inférieure de l'organe de décompression, l'organe de décompression comprenant au moins une ouverture radiale configurée pour mettre en communication la partie supérieure creuse de l'organe de décompression avec la partie inférieure du pot de temporisation lorsque le clapet auxiliaire est ouvert ; et - une rondelle épaulée dont la surface supérieure fait office de clapet secondaire, servant de butée pour l'extrémité inférieure de la tige de commande faisant office de siège secondaire, ladite rondelle épaulée étant disposée autour de la partie supérieure de l'organe de décompression, des moyens de solidarisation en translation étant ménagés entre ladite rondelle épaulée et la partie supérieure de l'organe de décompression, ladite rondelle épaulée comprenant une jupe pénétrant de façon étanche dans un orifice central ménagé axialement dans le clapet principal, la face supérieure de ladite rondelle épaulée étant configurée pour être en contact avec l'extrémité inférieure de la tige de commande lors d'un appui sur l'extrémité supérieure de la tige de commande pour fermer le clapet secondaire, un jeu axial étant ménagé entre l'extrémité inférieure de la jupe de ladite rondelle épaulée et la partie inférieure de l'organe de décompression pour permettre un passage d'eau lorsque le clapet auxiliaire est en position ouverte, de cette manière, depuis une position de repos dans laquelle le clapet principal et le clapet auxiliaire sont fermés, un appui sur l'extrémité supérieure de la tige de commande se traduit tout d'abord par un déplacement vers le bas de la tige de commande, puis par un déplacement simultané vers le bas de la tige de commande, de la rondelle épaulée et de l'organe de décompression provoquant l'ouverture du clapet auxiliaire, l'eau contenue dans la partie inférieure du pot de temporisation pouvant alors librement s'écouler vers l'intérieur de la tige de commande par le jeu axial ménagé entre la partie inférieure de l'organe de décompression et la rondelle épaulée, puis par l'ouverture radiale de l'organe de décompression et l'intérieur de la partie supérieure de l'organe de décompression, le déplacement simultané de la tige de commande, de l'organe de décompression et du piston de temporisation provoquant alors l'ouverture du clapet principal. Tant que la poussée sur le volant est maintenue, l'extrémité inférieure de la tige de commande faisant office de siège secondaire reste en contact avec la face supérieure de la rondelle épaulée, ladite face supérieure faisant office de clapet secondaire, et ce n'est que lorsque la poussée sur le volant de commande sera relâchée que le fluide pourra s'écouler librement par l'intérieur de la tige de commande.

La cartouche à fermeture automatique temporisée selon la présente invention comporte moins de composants par rapport à l'état antérieur de la technique, permet ainsi d'obtenir un coût de revient moins élevé et un démontage moins complexe en cas de maintenance.

De façon connue, la ou les ouvertures d'entrée d'eau sont ménagées sous le pot de temporisation ou ménagées latéralement dans le pot de temporisation.

La partie inférieure de l'entretoise peut être rendue solidaire du pot de temporisation par tenons et mortaises.

De façon connue, la surface latérale intérieure du pot de temporisation comporte, de préférence, au moins une strie longitudinale permettant de créer une fuite de fluide entre la partie supérieure du pot de temporisation au-dessus du joint à lèvre et la partie inférieure du pot de temporisation au-dessous du joint à lèvre, la vitesse de retour du piston de temporisation étant conditionnée par la section de la strie longitudinale.

Selon l'invention, dès qu'un utilisateur appuie sur le volant de commande du robinet mitigeur, le clapet auxiliaire de la cartouche à fermeture automatique temporisée selon la présente invention s'ouvre et le piston de temporisation peut alors être enfoncé sans effort, ce qui permet d'ouvrir facilement le clapet principal.

Lorsque l'appui sur la tige de commande est relâché, le piston de temporisation remonte dans le pot de temporisation en étant freiné par la lèvre du joint à lèvre, l'eau s'écoule ainsi jusqu'à ce que le clapet principal se referme en position haute du piston de temporisation.

Lorsque le robinet mitigeur dans lequel la cartouche est installée est un robinet mitigeur pour lavabo, l'ouverture d'entrée d'eau de la cartouche est, de préférence, ménagée sous le pot de temporisation. Lorsque le robinet mitigeur dans lequel la cartouche est installée est un robinet mitigeur pour douche, l'ouverture d'entrée d'eau de la cartouche est, de préférence, ménagée latéralement dans le pot de temporisation. Dans les deux cas, l'ouverture d'entrée d'eau est, de préférence, en forme de sourire, de manière à permettre le réglage de la température de l'eau mitigée lors de la rotation dans le sens horaire ou antihoraire du volant de commande.

Le clapet auxiliaire est, de préférence, constitué d'un joint torique. Cependant, toute autre forme de joint pourrait également être utilisée, sans s'écarter du cadre de la présente invention.

Les moyens de solidarisation en translation ménagés entre la rondelle épaulée et la partie supérieure de l'organe de décompression peuvent, par exemple, être constitués d'au moins l'un parmi une griffe, une patte ou un filetage.

Dans la position de repos de la cartouche selon la présente invention, aucun appui n'est exercé sur la tige de commande de la cartouche, de cette manière le piston de temporisation est en position haute dans le pot de temporisation, le clapet principal étant ainsi fermé (surface supérieure du joint à lèvre en butée contre le siège principal). En outre, le clapet auxiliaire est également fermé dans la position de repos, de telle sorte qu'aucun écoulement d'eau ne se produit vers l'au moins une ouverture de sortie d'eau de la tige de commande.

Lorsqu'il y a un début d'appui sur le volant de commande du robinet, la tige de commande commence à descendre et pousse la rondelle épaulée et donc l'organe de décompression vers le bas, ce qui ouvre le clapet auxiliaire sous le piston de temporisation. Une chute de pression est alors créée sous le piston de temporisation, ce qui permet de faciliter l'ouverture du clapet principal. L'ouverture du clapet auxiliaire entraîne une fuite d'amorçage vers l'au moins une ouverture de sortie d'eau de la tige de commande par l'intermédiaire du clapet auxiliaire, puis du jeu axial entre la rondelle épaulée et la partie inférieure de l'organe de décompression, puis de l'au moins une ouverture radiale de l'organe de décompression, et enfin de la partie supérieure creuse de l'organe de décompression vers l'intérieur de la tige de commande puis vers la sortie. La décompression créée sous le piston de temporisation permet ainsi de faciliter la descente du piston de temporisation dans le pot de temporisation.

Par la suite, l'appui sur le volant de commande du robinet entraîne la descente du piston de temporisation, ce qui ouvre le clapet principal, l'extrémité inférieure de la tige de commande étant toujours en butée contre la rondelle épaulée.

Ensuite, lorsque l'appui sur le volant de commande du robinet est relâché, la tige de commande remonte sous l'effet de son ressort de rappel, et le clapet auxiliaire se referme. Un espace se libère entre la face inférieure de la tige de commande et la face supérieure de la rondelle épaulée, ce qui libère le passage du fluide depuis le siège principal vers l'intérieur de la tige de commande par l'intermédiaire d'au moins une cannelure formée dans la partie inférieure de la tige de commande. L'eau provenant de l'ouverture ou des ouvertures d'entrée d'eau ménagée(s) dans le pot de temporisation passe alors librement dans la tige de commande et s'écoule vers l'au moins une ouverture de sortie d'eau de la tige de commande. Le piston de temporisation remonte alors dans le pot de temporisation sous l'effet du ressort de compression disposé au fond du pot de temporisation jusqu'à ce que le clapet principal vienne en butée contre le siège principal, la cartouche revenant alors dans sa position de repos.

Selon une caractéristique particulière de l'invention, l'entraîneur comporte à sa partie inférieure la jupe qui est le siège principal du robinet, ledit entraîneur comprenant une partie supérieure qui pénètre dans ladite première partie supérieure de l'entretoise, la partie inférieure de la tige de commande comportant au moins une cannelure mâle qui coopère avec des cannelures femelles ménagées dans une collerette formée dans la partie supérieure de l'entraîneur, un joint d'étanchéité étant disposé à l'intérieur de l'entretoise supérieure entre la tige de commande et l'entraîneur.

La rotation simultanée de l'ensemble tige de commande-entraîneur-pot de temporisation est ainsi assurée lors de la rotation du volant de commande de robinet, de cette manière la température de l'eau mitigée peut être réglée par rotation dans le sens horaire ou antihoraire du volant de commande du robinet.

Selon une caractéristique particulière de l'invention, la surface latérale intérieure de la partie inférieure de la tige de commande comprend au moins une cannelure longitudinale pour laisser passer le débit principal de fluide lorsque l'appui sur la tige est relâché.

Ainsi, lorsque le clapet principal est ouvert et que le clapet auxiliaire est fermé, l'au moins une cannelure longitudinale de la tige de commande permet un écoulement d'eau depuis le pot de temporisation vers l'intérieur de la tige de commande creuse, et cela malgré le fait que la partie supérieure de l'organe de décompression se trouve en partie dans la tige de commande.

Selon un premier mode de réalisation de l'invention, la surface supérieure de la rondelle épaulée est configurée pour empêcher le passage d'eau lorsque la rondelle épaulée est en contact avec l'extrémité inférieure de la tige de commande, ladite surface supérieure de la rondelle épaulée étant, par exemple, plane. Ce premier mode de réalisation correspond à la fonction anti-blocage.

Ainsi, lors d'un appui sur l'extrémité supérieure de la tige de commande, lorsque l'extrémité inférieure de la tige de commande est en butée contre la surface supérieure plane de la rondelle épaulée, la rondelle épaulée bloque le passage d'eau vers l'intérieur de la tige de commande, permettant ainsi un fonctionnement antiblocage du robinet, c'est-à-dire un fonctionnement dans lequel l'eau ne peut pas s'écouler du robinet tant que la tige de commande reste enfoncée. Tant que l'appui est exercé sur le volant de commande, il n'y a qu'un goutte à goutte à la sortie du robinet, résultant de l'ouverture du clapet auxiliaire. Mais dès que la pression sur le volant de commande est relâchée et que la tige de commande remonte, la face inférieure de la tige de commande quitte la face supérieure lisse de la rondelle épaulée, ce qui libère le passage de fluide vers l'intérieur de la tige de commande, puis vers l'au moins un orifice radial de la tige de commande, au moins une cannelure étant ménagée dans la tige de commande pour faciliter l'écoulement de fluide.

Selon un second mode de réalisation de l'invention, la surface supérieure de la rondelle épaulée comporte au moins une cannelure en regard de l'extrémité inférieure de la tige de commande, ladite au moins une cannelure étant configurée pour permettre le passage d'eau dès l'ouverture du clapet principal.

Ainsi, lors d'un appui sur l'extrémité supérieure de la tige de commande, lorsque l'extrémité inférieure de la tige de commande est en butée contre la surface supérieure à cannelure de la rondelle épaulée, l'eau peut passer par l'au moins une cannelure de la rondelle épaulée puis par l'au moins une cannelure longitudinale intérieure de la tige de commande dès que le clapet principal s'ouvre, permettant ainsi un écoulement d'eau même lorsque la tige de commande reste enfoncée. Dans ce cas, il n'y a pas de fonction anti-blocage.

La présente invention, outre qu'elle apporte une solution plus simple et moins coûteuse, a ainsi pour autre avantage de permettre sans coût additionnel de choisir soit un mode de fonctionnement en ouverture directe lors de l'appui sur le volant de commande, soit un mode de fonctionnement en mode antiblocage (c'est-à-dire, ouverture uniquement si on relâche l'appui sur le volant de commande et ce avec le même mécanisme), par simple substitution de la rondelle épaulée (avec ou sans cannelure).

Selon une caractéristique particulière de l'invention, l'extrémité inférieure de la tige de commande comporte une gorge dans laquelle est disposé un anneau d'arrêt apte à venir en appui, dans la position de repos, contre la partie inférieure d'un épaulement formé dans l'entraîneur.

Ainsi, l'anneau d'arrêt et l'épaulement permettent de limiter la course de la tige de commande lorsque le mécanisme est en position fermée.

Selon une caractéristique particulière de l'invention, la tige de commande comporte, à l'intérieur de celle-ci, une vis de réglage de débit disposée au niveau de l'au moins une ouverture radiale de sortie d'eau.

Ainsi, le réglage, par un technicien, de la position de la vis de réglage de débit à l'intérieur de la tige de commande permet le réglage du débit d'eau à la sortie de l'au moins une ouverture de sortie d'eau de la cartouche.

Selon un mode de réalisation, la surface extérieure du fond du pot de temporisation comprend un système d'obturation configuré pour coopérer avec l'arrivée d'eau froide et l'arrivée d'eau chaude de façon à mitiger la température de l'eau en fonction de la position angulaire du pot de temporisation définie par la position angulaire de la tige de commande.

Ainsi, le système d'obturation, par exemple en forme de sourire, régule la température en fonction de l'obturation des arrivées d'eau froide et d'eau chaude.

Selon un mode de réalisation, l'au moins une ouverture d'entrée d'eau est une fente formée à la périphérie du pot de temporisation, la hauteur de ladite fente étant continûment croissante puis décroissante en forme de sourire, ladite fente étant positionnée en regard de l'arrivée d'eau froide et de l'arrivée d'eau chaude de façon à mitiger la température de l'eau en fonction de la position angulaire du pot de temporisation définie par la position angulaire de la tige de commande.

La présente invention a également pour objet un robinet mitigeur pour douche ou lavabo intégrant une cartouche à fermeture automatique temporisée telle que décrite ci-dessus.

Ainsi, la cartouche à fermeture automatique temporisée selon la présente invention est installée, de manière amovible et interchangeable, dans un corps de forme généralement cylindrique du robinet mitigeur dans lequel débouchent des arrivées d'eau froide et d'eau chaude et depuis lequel s'étend une sortie d'eau mitigée.

Pour mieux illustrer l'objet de la présente invention, on va en décrire ci-après, à titre illustratif et non limitatif, deux modes de réalisation préférés, avec référence aux dessins annexés.

### Sur ces dessins :

[fig.1] est une vue en coupe longitudinale d'une cartouche à fermeture automatique temporisée dans la position au repos selon un premier mode de réalisation de la présente invention, lorsque son clapet principal et son clapet auxiliaire sont fermés ;
[fig.2] est une vue en coupe longitudinale de la cartouche de la Figure 1, lorsque son clapet principal est fermé, son clapet secondaire est fermé et son clapet auxiliaire est ouvert ;
[fig.3] est une vue en coupe longitudinale de la cartouche de la Figure 1, lorsque son clapet principal et son clapet auxiliaire sont ouverts ;
[fig.4] est une vue en coupe longitudinale de la cartouche de la Figure 1, lorsque ses clapets principal et secondaire sont ouverts et son clapet auxiliaire est fermé ;
[fig.5] est une vue en coupe longitudinale d'un robinet mitigeur dans lequel est insérée la cartouche de la Figure 1 ;
[fig.6] est une vue en coupe longitudinale d'un robinet mitigeur dans lequel est insérée une cartouche à fermeture automatique temporisée selon un second mode de réalisation de la présente invention ; et
[fig.7] est une vue en coupe transversale du robinet mitigeur de la Figure 5 ou 6, au niveau du dessous du pot de temporisation.

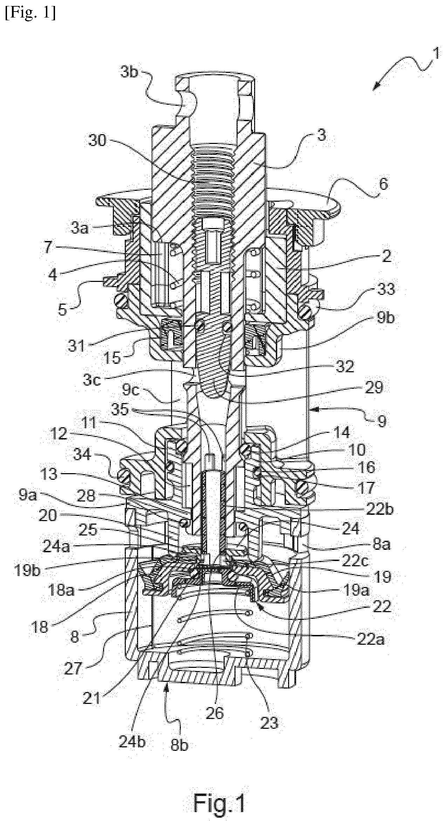

Si l'on se réfère à la Figure 1, on peut voir qu'il y est représenté une cartouche à fermeture automatique temporisée 1 selon un premier mode de réalisation de la présente invention, dans sa position de repos.

La cartouche à fermeture automatique temporisée 1 est configurée pour être installée dans un robinet mitigeur, tel qu'un robinet mitigeur pour douche ou lavabo.

La cartouche à fermeture automatique temporisée 1 comprend un moyeu creux 2 recevant une tige de commande creuse 3, un ressort de rappel 4 étant disposé entre le fond du moyeu creux 2 et un épaulement 3a de la tige de commande creuse 3.

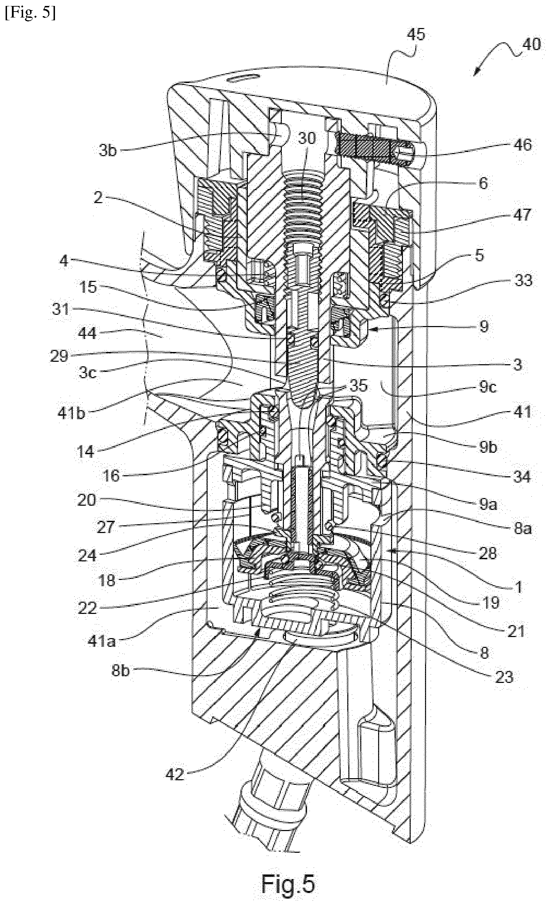

L'extrémité supérieure de la tige de commande 3 est configurée pour recevoir un volant de commande de robinet (non représenté à la Figure 1) selon tous les moyens connus de l'homme du métier, un moyen de liaison, tel qu'une vis introduite dans un alésage transversal 3b formé dans l'extrémité supérieure de la tige de commande 3, permettant la fixation du volant de commande sur la tige de commande 3, tel que décrit par la suite à la Figure 5.

Le moyeu creux 2 est contenu dans un chapeau creux 5 rendu solidaire du corps de robinet par un système tel que tenons et mortaises et par une bague filetée 47 vissée dans ledit corps de robinet. Un moyen connu tel qu'une rondelle épaulée 6 est intercalée pour former une bride réglable permettant de limiter la rotation de la tige de commande 3.

La partie supérieure de la tige de commande 3 coopère avec le moyeu creux 2 par l'intermédiaire de cannelures 7 formées à l'intérieur du moyeu creux 2, de telle sorte que la tige de commande 3 est déplaçable en translation dans le moyeu creux 2 tout en étant solidaire en rotation.

La cartouche à fermeture automatique temporisée 1 comprend en outre un pot de temporisation 8 comprenant une ou des ouvertures d'entrée d'eau 8a ménagées dans la surface latérale du pot de temporisation 8.

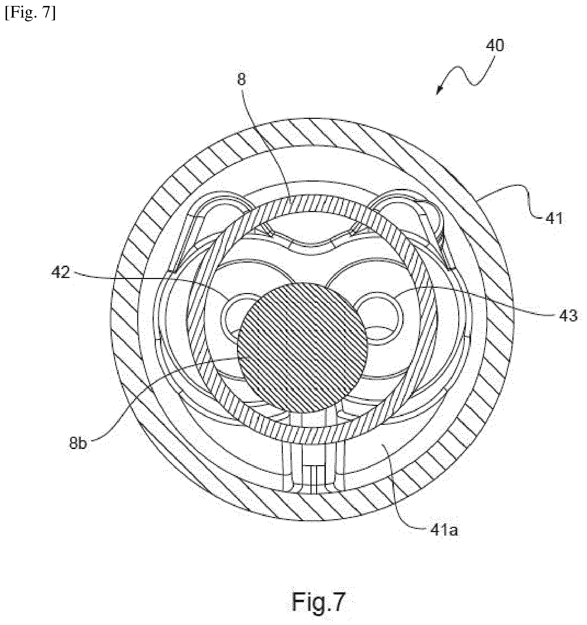

La surface extérieure du fond du pot de temporisation 8 comprend en outre un système d'obturation 8b (qui sera décrit plus en détail à la Figure 7) configuré pour coopérer avec une arrivée d'eau froide et une arrivée d'eau chaude (non représentées à la Figure 1) de façon à mitiger la température de l'eau entrant dans la ou les ouvertures d'entrée d'eau 8a du pot de temporisation 8, en fonction de la position angulaire du pot de temporisation 8.

La cartouche à fermeture automatique temporisée 1 comprend en outre une entretoise 9 s'intercalant entre le moyeu creux 2 et le pot de temporisation 8.

L'entretoise 9 comporte une première partie supérieure 9b dans laquelle la tige de commande 3 peut coulisser et pivoter selon son axe longitudinal et une seconde partie inférieure de type entraîneur 9a rendue solidaire en rotation de la partie inférieure de la tige de commande 3 par des cannelures 12 ménagées dans une collerette 13 formée dans ledit entraîneur 9a.

L'entraîneur 9a est solidaire du pot de temporisation 8 par l'intermédiaire de tenons-mortaises ou tout autre type de solidarisation, par exemple des cannelures.

L'entraîneur 9a de l'entretoise 9 comprend une partie supérieure 10 qui pénètre dans un logement 11 ménagé sous la première partie supérieure 9b. La partie supérieure de l'entraîneur 9a pénètre ainsi dans la partie inférieure de la première partie supérieure 9b.

Un joint d'étanchéité 14, par exemple un joint torique, est disposé entre la tige de commande 3, la première partie supérieure 9b fixe et l'entraîneur 9a.

Un joint d'étanchéité 15, par exemple un joint à lèvre, est disposé entre la tige de commande 3, le moyeu creux 2 et la première partie supérieure 9b afin d'assurer l'étanchéité autour de la tige de commande 3.

Un joint d'étanchéité 16 de type torique, porté par une gorge 17 ménagée à la périphérie de la partie supérieure 10 de l'entraîneur 9a est en outre disposé entre la première partie supérieure 9b et l'entraîneur 9a, de cette manière, l'intégralité de l'écoulement de fluide se fait par l'intérieur de la tige de commande 3. Le joint 16 permet de diminuer la pression d'eau sur le joint 14 et donc sur la tige de commande 3.

La tige de commande 3 s'étend à travers l'entretoise 9 pour déboucher à son extrémité inférieure dans le pot de temporisation 8 et est configurée pour coulisser dans ladite entretoise 9.

Une ou des ouvertures de sortie d'eau 3c sont ménagées dans la paroi latérale de la tige de commande 3 au niveau de la première partie supérieure 9b, un passage latéral 9c étant ménagé dans la partie médiane de la première partie supérieure 9b au regard de la ou des ouvertures 3c pour permettre un écoulement d'eau depuis l'intérieur de la tige de commande creuse 3 vers une sortie d'eau d'un robinet mitigeur dans lequel est installée la cartouche 1.

La première partie supérieure 9b est fixée dans le corps du robinet mitigeur par une bague filetée 47 qui vient en appui sur le chapeau creux 5, tandis que l'entraîneur 9a est mobile en rotation avec la tige de commande 3, ce qui permet la rotation simultanée de l'ensemble tige de commande 3-entraîneur 9a-pot de temporisation 8 lors de la rotation de la tige de commande 3. De cette manière la température de l'eau mitigée peut être réglée, à l'aide du système d'obturation 8b, par rotation dans le sens horaire ou antihoraire de la tige de commande 3.

La cartouche à fermeture automatique temporisée 1 comprend en outre un piston de temporisation 18 disposé dans le pot de temporisation 8 et configuré pour ouvrir et fermer un clapet principal 19c situé au niveau de la partie supérieure du pot de temporisation 8, ledit clapet principal 19c étant la partie supérieure plate d'un joint à lèvre 19 disposé sur le piston de temporisation 18 et dont la lèvre 19a s'applique sur la surface latérale intérieure du pot de temporisation 8.

Le siège principal est formé par une jupe 20 à l'extrémité inférieure de l'entraîneur 9a, en regard du clapet principal 19c.

Un clapet auxiliaire 21 de type joint torique est porté par la partie inférieure 22a d'un organe de décompression 22, ladite partie inférieure 22a de l'organe de décompression 22 étant disposée sous le piston de temporisation 18, et la partie supérieure 22b de l'organe de décompression 22 étant creuse, traversant le piston de temporisation 18 et s'étendant axialement dans la partie inférieure de la tige de commande creuse 3.

Le siège auxiliaire 18a associé au clapet auxiliaire 21 est formé dans la partie intérieure du piston de temporisation 18, ledit clapet auxiliaire 21 étant configuré pour être rappelé en position fermée par un ressort de rappel 23 logé entre le fond du pot de temporisation 8 et la partie inférieure 22a de l'organe de décompression 22.

La partie supérieure 22b de l'organe de décompression 22 comprend au moins une ouverture radiale 22c configurée pour mettre en communication la partie inférieure du pot de temporisation 8 avec la partie supérieure creuse 22b de l'organe de décompression 22 lorsque le clapet auxiliaire 21 est ouvert.

La cartouche à fermeture automatique temporisée 1 comprend en outre une rondelle épaulée 24 dont la face supérieure fait office de clapet secondaire, sert de butée pour l'extrémité inférieure de la tige de commande 3 qui constitue le siège secondaire du clapet secondaire, ladite rondelle épaulée 24 étant disposée autour de la partie supérieure 22b de l'organe de décompression 22, des moyens de solidarisation en translation étant ménagés entre ladite rondelle épaulée 24 et la partie supérieure 22b de l'organe de décompression 22. De préférence dans le cas présent, les moyens de solidarisation en translation sont constitués par clipsage d'une saillie 25 formée à l'intérieur de la rondelle épaulée 24 sur une gorge 26 formée autour de la partie supérieure 22b de l'organe de décompression 22 au-dessus de l'ouverture 22c. Cependant, les moyens de solidarisation en translation pourraient également être constitués d'une griffe, d'une patte ou d'un filetage, sans s'écarter du cadre de la présente invention.

La rondelle épaulée 24 comprend une jupe 24a pénétrant de façon étanche dans un orifice central 19b ménagé axialement dans le clapet principal 19c solidaire du joint à lèvre 19.

La face supérieure de la rondelle épaulée 24 est configurée pour être en contact avec l'extrémité inférieure de la tige de commande 3 lors d'un appui sur l'extrémité supérieure de la tige de commande 3, un jeu axial 24b étant ménagé entre l'extrémité inférieure de la jupe 24a de la rondelle épaulée 24 et la face supérieure de la partie inférieure 22a de l'organe de décompression 22 pour permettre un passage d'eau lorsque le clapet auxiliaire 21 est en position ouverte.

De façon connue, la surface latérale intérieure du pot de temporisation 8 comporte une strie longitudinale 27 dont la section permet de contrôler la vitesse de déplacement du piston de temporisation 18 dans le pot de temporisation 8.

L'extrémité inférieure de la tige de commande 3 comporte une gorge dans laquelle est disposé un anneau d'arrêt 28 apte à venir en appui, dans la position de repos, contre la partie inférieure de la collerette 13 formée dans l'entraîneur 9a, ce qui permet de limiter la course de la tige de commande 3 lorsque le mécanisme est en position repos.

De façon connue, la partie supérieure de la tige de commande 3 reçoit une vis interne de réglage de débit 29 pour permettre d'obturer plus ou moins le passage de l'eau par la ou les ouvertures de sortie d'eau 3c. La vis de réglage de débit 29 est vissée à l'intérieur de la tige de commande 3 à l'aide d'un filetage 30 formé à l'intérieur de cette dernière. Un joint d'étanchéité 31 est disposé dans une gorge 32 ménagée dans la vis de réglage de débit 29 en regard de la surface latérale intérieure de la tige de commande 3.

Deux joints d'étanchéité 33 et 34 sont disposés, respectivement, en partie supérieure et en partie inférieure de la première partie supérieure 9b, de manière à assurer l'étanchéité du passage latéral 9c ménagé dans l'entretoise 9 de la cartouche 1 lorsque cette dernière est installée dans un corps de robinet.

Dans la position de repos de la cartouche 1 représentée à la Figure 1, aucun appui n'est exercé sur la tige de commande 3 de la cartouche 1 (tige de commande 3 en position haute, anneau d'arrêt 28 en butée contre la collerette 13). Le piston de temporisation 18 est alors en position haute dans le pot de temporisation 8, le clapet principal 19c est fermé. Le clapet auxiliaire 21 est également fermé et il n' y a aucun écoulement d'eau ne se produit vers l'ouverture de sortie d'eau 3c de la tige de commande 3.

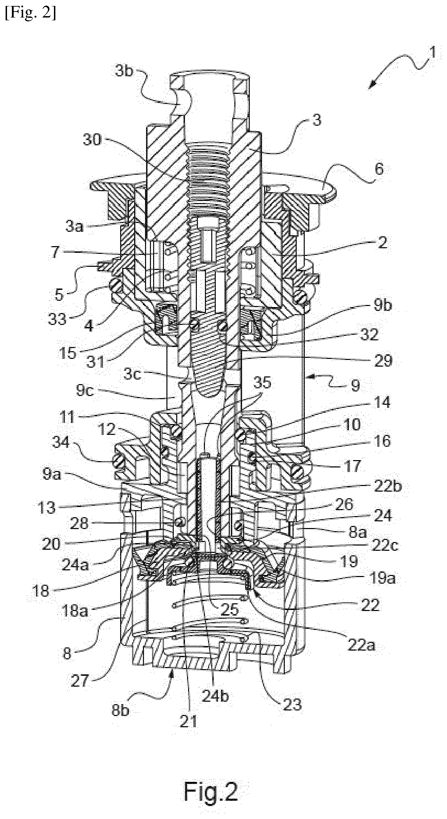

Si l'on se réfère à la Figure 2, on peut voir qu'il y est représenté la cartouche à fermeture automatique temporisée 1 lorsque son clapet principal 19c est fermé et son clapet auxiliaire 21 est ouvert.

A partir de la position de repos représentée à la Figure 1, un appui sur l'extrémité supérieure de la tige de commande 3 se traduit tout d'abord par un déplacement vers le bas de la tige de commande 3 jusqu'à ce que l'extrémité inférieure de la tige de commande 3 vienne en butée contre la rondelle épaulée 24 fermant alors le clapet secondaire, puis par un déplacement simultané vers le bas de la tige de commande 3 et de l'organe de décompression 22 provoquant l'ouverture du clapet auxiliaire 21 lorsque la rondelle épaulée 24 vient en butée contre le clapet principal 19c solidaire du joint à lèvre 19, tel que représenté à la Figure 2.

L'eau contenue dans la partie inférieure du pot de temporisation 8 peut alors librement s'écouler vers l'intérieur de la tige de commande 3 par le jeu axial 24b ménagé entre la partie inférieure 22a de l'organe de décompression 22 et la rondelle épaulée 24, puis par l'au moins une ouverture radiale 22c de l'organe de décompression 22 et l'intérieur de la partie supérieure creuse 22b de l'organe de décompression 22, le déplacement simultané de la tige de commande 3, de l'organe de décompression 22 et du piston de temporisation 18 pouvant alors se poursuivre sans effort pour provoquer l'ouverture du clapet principal 19c.

Ainsi, lorsqu'il y a un début de pression sur l'extrémité supérieure de la tige de commande 3, la tige de commande 3 commence à descendre et pousse la rondelle épaulée 24 et donc l'organe de décompression 22 vers le bas, ce qui ouvre le clapet auxiliaire 21 sous le piston de temporisation 18. Une chute de pression est alors créée derrière le piston de temporisation 18, ce qui permet de faciliter l'ouverture du clapet principal 19c. L'ouverture du clapet auxiliaire 21 provoque une fuite d'amorçage vers l'ouverture de sortie d'eau 3c de la tige de commande 3 par l'intermédiaire du clapet auxiliaire 21, puis du jeu axial 24b entre la rondelle épaulée 24 et la partie inférieure 22a de l'organe de décompression 22, puis de l'au moins une ouverture radiale 22c de l'organe de décompression 22, et enfin de la partie supérieure creuse 22a de l'organe de décompression 22. La décompression créée sous le piston de temporisation 18 permet ainsi de faciliter la descente du piston de temporisation 18 dans le pot de temporisation 8.

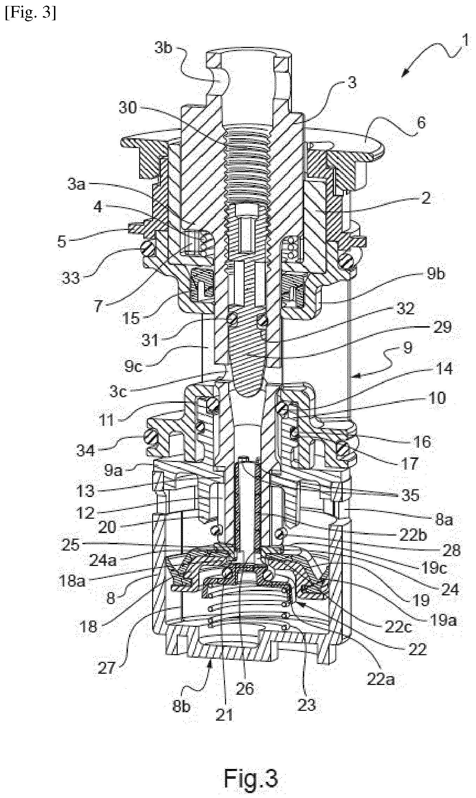

Si l'on se réfère à la Figure 3, on peut voir qu'y est représentée la cartouche à fermeture automatique temporisée 1 lorsque son clapet principal 19c et son clapet auxiliaire 21 sont ouverts.

L'ouverture du clapet auxiliaire 21 à la Figure 2 permet de faciliter, par décompression, la descente du piston de temporisation 18 dans le pot de temporisation 8. Un enfant ou une personne âgée peut ainsi facilement appuyer sans effort sur un volant de commande de robinet relié à l'extrémité supérieure de la tige de commande 3 pour permettre un écoulement d'eau du robinet.

Un appui sans effort sur l'extrémité supérieure de la tige de commande 3 provoque la descente du piston de temporisation 18 dans le pot de temporisation 8, ce qui ouvre le clapet principal 19c, tel que représenté à la Figure 3, et remplit la partie supérieure du pot de temporisation 18 au-dessus du joint à lèvre 19, l'extrémité inférieure de la tige de commande 3 qui est le siège secondaire étant toujours en butée contre la rondelle épaulée 24 dont la face supérieure est le clapet secondaire.

La surface latérale intérieure de la partie inférieure de la tige de commande 3 comprend des cannelures longitudinales 35 débouchant dans le pot de temporisation 8 pour assurer le débit principal du robinet mitigeur.

Selon le premier mode de réalisation de l'invention représenté aux Figures 1 à 4, la surface supérieure de la rondelle épaulée 24 est plane et permet ainsi d'empêcher un passage d'eau dans la tige de commande 3 depuis la partie supérieure du pot de temporisation 8 lorsque la rondelle épaulée 34 est en contact avec l'extrémité inférieure de la tige de commande 3.

Ainsi, l'eau ne peut pas s'écouler du robinet tant que la tige de commande 3 reste enfoncée. Tout au plus, il y a un goutte à goutte à la sortie du robinet, résultant de l'ouverture du clapet auxiliaire 21.

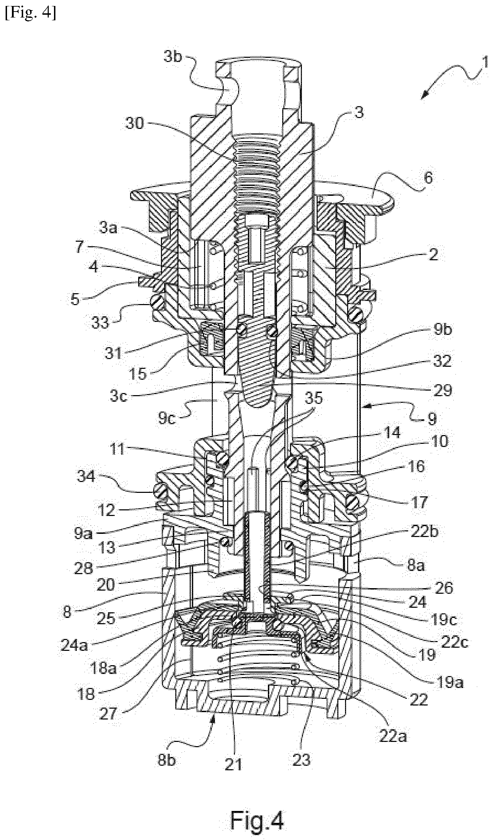

Si l'on se réfère à la Figure 4, on peut voir qu'il y est représenté la cartouche à fermeture automatique temporisée 1 lorsque son clapet principal 19c est ouvert et son clapet auxiliaire 21 est fermé .

Lorsque l'appui sur l'extrémité supérieure de la tige de commande 3 est relâché, la tige de commande 3 remonte sous l'effet de son ressort de rappel 4, et le clapet auxiliaire 21 se referme sous l'effet du ressort de rappel 23.

Les cannelures longitudinales internes 35 de la tige de commande 3 n'étant plus obturées par la rondelle épaulée 24, l'eau provenant de la ou les ouvertures d'entrée d'eau 8a ménagées dans le pot de temporisation 8 passe alors directement dans la tige de commande 3 depuis le pot de temporisation 8 par l'intermédiaire desdites cannelures longitudinales 35 et s'écoule vers la ou les ouvertures de sortie d'eau 3c de la tige de commande 3.

Le piston de temporisation 18 peut alors remonter dans le pot de temporisation 8 sous l'effet du ressort de rappel 23 jusqu'à ce que le clapet principal 19c vienne en butée contre le siège principal formé par la jupe 20, la cartouche 1 revenant alors dans sa position repos.

Si l'on se réfère à la Figure 5, on peut voir qu'il y est représenté un robinet mitigeur 40 pour lavabo dans lequel est insérée la cartouche à fermeture automatique temporisée 1 selon le premier mode de réalisation.

Il est à noter qu'à la Figure 5, la cartouche 1 a été représentée dans la position décrite à la Figure 3, c'est-à-dire la position de la tige de commande 3 dans laquelle le clapet principal 19c et le clapet auxiliaire 21 sont ouverts et dans laquelle l'extrémité inférieure de la tige de commande 3 est en butée contre la rondelle épaulée 24 (fonctionnement antiblocage) dont la surface supérieure est lisse, ce qui empêche tout écoulement d'eau vers l'intérieur de la tige de commande 3.

Le robinet mitigeur 40 comprend un corps de robinet 41 creux de forme sensiblement cylindrique dans lequel est installée la cartouche 1 de manière amovible et interchangeable.

Une arrivée d'eau froide 42 et une arrivée d'eau chaude (non représentée à la Figure 5 en raison de la coupe, mais qui sera représentée à la Figure 7) débouchent dans la chambre inférieure 41a du corps de robinet 41, de manière à être en contact avec le système d'obturation 8b disposé sous le pot de temporisation 8 de la cartouche 1.

La température du mélange d'eau provenant de l'arrivée d'eau froide 42 et de l'arrivée d'eau chaude peut ainsi être réglée par le système d'obturation 8b. L'eau mitigée peut ensuite entrer dans la ou les ouvertures latérales d'entrée d'eau 8a du pot de temporisation 8 par l'intermédiaire de la chambre inférieure 41a du corps de robinet 41.

Une sortie d'eau mitigée 44 s'étend depuis la partie supérieure 41b du corps de robinet 41, ladite sortie d'eau mitigée 44 étant ménagée en regard du passage latéral 9c de l'entretoise 9. L'eau mitigée sortant de l'ouverture de sortie d'eau 3c de la tige de commande 3 de la cartouche 1 peut ainsi s'écouler vers la sortie d'eau mitigée 44 du robinet mitigeur 40.

Les deux joints d'étanchéité 33 et 34 de la cartouche 1 permettent de garantir l'étanchéité du passage latéral 9c ménagé dans l'entretoise 9 de la cartouche 1 lorsque cette dernière est installée dans le corps de robinet 41.

De façon connue, la cartouche 1 est maintenue en place dans le corps de robinet mitigeur par un écrou vissé dans ledit corps, l'écrou venant en butée contre le chapeau creux 5.

Le robinet mitigeur 40 comprend en outre un volant de commande 45 fixé sur l'extrémité supérieure de la tige de commande 3 pour faciliter la manœuvre du robinet.

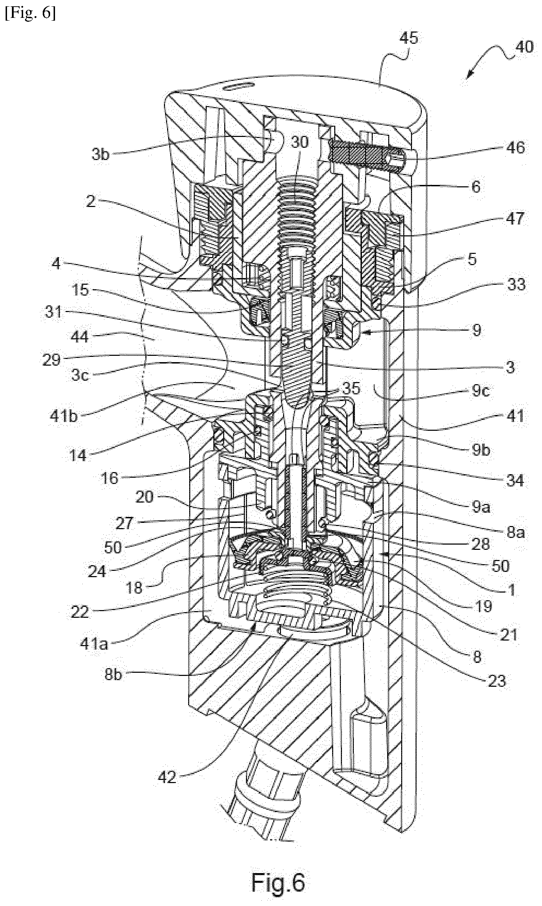

Si l'on se réfère à la Figure 6, on peut voir qu'il y est représenté un robinet mitigeur 40 dans lequel est insérée une cartouche à fermeture automatique temporisée 1 selon un second mode de réalisation de la présente invention.

La cartouche 1 selon le second mode de réalisation de l'invention est identique à celle du premier mode de réalisation de l'invention à l'exception du fait que la surface supérieure de la rondelle épaulée 24 comporte des cannelures 50 en regard de l'extrémité inférieure de la tige de commande 3, lesdites cannelures 50 étant configurées pour permettre un passage d'eau depuis le pot de temporisation 8 vers les cannelures internes 35 de la tige de commande 3 dès l'ouverture du clapet principal 19c.

Ainsi, dans le second mode de réalisation, lors d'un appui sur le volant de commande 45, lorsque l'extrémité inférieure de la tige de commande 3 est en butée contre la surface supérieure de la rondelle épaulée 24 (tel que représenté à la Figure 6), l'eau peut passer immédiatement par une ou les cannelures 50 de la rondelle épaulée 24 puis par les cannelures longitudinales internes 35 de la tige de commande 3 dès que le clapet principal 19c s'ouvre, permettant ainsi un écoulement d'eau même lorsque l'utilisateur maintient l'appui sur le volant de commande 45 du robinet mitigeur 40.

La présente invention, outre le fait qu'elle apporte une solution plus simple et moins coûteuse, a ainsi pour autre avantage de permettre sans coût additionnel de choisir entre un mode de fonctionnement en ouverture directe (tel que représenté à la Figure 6) lors de l'appui sur le volant de commande 45 et un mode de fonctionnement en mode antiblocage (tel que représenté à la Figure 5), par simple substitution de la rondelle épaulée 24 (avec ou sans cannelure 50).

Si l'on se réfère à la Figure 7, on peut voir qu'il y est représenté le robinet mitigeur 40 en coupe transversale au niveau du système d'obturation 8b de la cartouche 1.

De façon connue, le système d'obturation 8b ménagé sous le pot de temporisation 8 possède une forme circulaire, décalée par rapport au centre de la section transversale du pot de temporisation 8.

L'arrivée d'eau froide 42 et l'arrivée d'eau chaude 43 débouchent, dans la chambre inférieure 41a du corps de robinet 41, sous le pot de temporisation 8, de manière à coopérer avec le système d'obturation 8b de façon à mitiger la température de l'eau en fonction de la position angulaire du pot de temporisation 8 définie par la position angulaire de la tige de commande 3.

Le système d'obturation 8b permet ainsi d'obturer plus ou moins l'arrivée d'eau froide 42 et l'eau d'eau chaude 43 (de manière complémentaire) en fonction de la position angulaire du pot de temporisation 8, de manière à régler la température de l'eau mitigée en sortie 44 du robinet mitigeur 40.

Il est à noter que l'arrivée d'eau froide 42 et l'arrivée d'eau chaude 43 pourraient également être situées orthogonalement au pot de temporisation 8 en regard de la ou des ouvertures d'entrée d'eau latérales 8a du pot de temporisation 8, sans s'écarter du cadre de la présente invention. Dans ce cas, la ou les ouvertures d'entrée d'eau 8a seraient situées dans une fente (sensiblement en forme de sourire) dont la hauteur serait continûment croissante puis décroissante, de façon à mitiger la température de l'eau en fonction de la position angulaire du pot de temporisation 8 définie par la position angulaire de la tige de commande 3.

Lorsque le robinet mitigeur 40 dans lequel la cartouche 1 est installée est un robinet mitigeur 40 pour plage de lavabo, le système d'obturation 8b est, de préférence, ménagé sous le pot de temporisation 8 de manière à coopérer avec les arrivées verticales d'eau froide et d'eau chaude 42, 43 débouchant dans la chambre inférieure 41a du corps de robinet 41 (tel que représenté aux Figures 5 à 7). Au contraire, lorsque le robinet mitigeur dans lequel la cartouche 1 est installée est un robinet mitigeur mural, l'ouverture d'entrée d'eau 8a possède, de préférence, une forme de sourire et coopère directement avec les arrivées d'eau froide et d'eau chaude 42, 43 débouchant de manière latérale dans le corps de robinet.

Il est bien entendu que les modes de réalisation particuliers qui viennent d'être décrits ont été donnés à titre indicatif et non limitatif, et que des modifications peuvent être apportées sans que l'on s'écarte pour autant des revendications annexées.

## Revendications

1. - Cartouche à fermeture automatique temporisée (1) pour un robinet mitigeur (40), tel qu'un robinet mitigeur pour douche ou lavabo, **caractérisée par le fait qu'**elle comprend :
- un moyeu creux (2) recevant une tige de commande (3) creuse à ressort de rappel (4), l'extrémité supérieure de la tige de commande (3) étant configurée pour recevoir un volant de commande de robinet (45) ;
- un pot de temporisation (8) configuré pour être relié à une arrivée d'eau froide (42) et à une arrivée d'eau chaude (43) par l'intermédiaire d'au moins une ouverture d'entrée d'eau (8a) ;
- une entretoise (9) s'intercalant entre le moyeu creux (2) et le pot de temporisation (8), la tige de commande (3) s'étendant à travers l'entretoise (9) pour déboucher à son extrémité inférieure dans le pot de temporisation (8) et étant configurée pour coulisser dans ladite entretoise (9), au moins une ouverture de sortie d'eau (3c) étant ménagée dans la paroi latérale de la tige de commande (3) au niveau de l'entretoise (9), au moins un passage latéral (9c) étant ménagé dans ladite entretoise (9) pour permettre un écoulement d'eau depuis l'intérieur de la tige de commande (3) creuse vers une sortie d'eau (44) du robinet mitigeur (40), l'entretoise (9) comportant une première partie supérieure (9b) dans laquelle la tige de commande (3) est apte à coulisser et pivoter selon son axe longitudinal, ladite première partie supérieure (9b) étant configurée pour être maintenue dans le corps de robinet par un chapeau creux et une bague filetée (47) configurée pour être vissée dans ledit corps de robinet, ladite bague filetée (47) venant en appui sur le chapeau creux qui enveloppe la première partie supérieure (9b), ledit chapeau creux étant configuré pour être rendu solidaire en rotation du corps de robinet, l'entretoise (9) comportant en outre une seconde partie inférieure de type entraîneur (9a) solidaire en rotation de la tige de commande (3), ledit entraîneur (9a) étant également solidaire en rotation du pot de temporisation (8) et ;
- un piston de temporisation (18) disposé dans le pot de temporisation (8) et configuré pour ouvrir et fermer un clapet principal (19c) situé au niveau de la partie supérieure du pot de temporisation (8) ;
- ledit clapet principal (19c) étant constitué par la face supérieure d'un joint à lèvre (19) disposé sur le piston de temporisation (18) et dont la lèvre (19a) s'applique sur la surface latérale intérieure du pot de temporisation (8), le siège principal associé au clapet principal (19c) étant formé par une jupe (20) à l'extrémité inférieure de l'entretoise (9), l'extrémité inférieure de la tige de commande (3) étant configurée pour permettre une circulation d'eau depuis le pot de temporisation (8) vers l'au moins une ouverture de sortie d'eau (3c) de la tige de commande (3) ;
- un clapet auxiliaire (21) porté par la partie inférieure (22a) d'un organe de décompression (22), ladite partie inférieure (22a) de l'organe de décompression (22) étant disposée sous le piston de temporisation (18) et la partie supérieure (22b) de l'organe de décompression (22) étant creuse, traversant le piston de temporisation (18) et s'étendant axialement dans la partie inférieure de la tige de commande (3) creuse, le siège auxiliaire (18a) associé au clapet auxiliaire (21) étant formé dans la partie intérieure du piston de temporisation (18), ledit clapet auxiliaire (21) étant configuré pour être rappelé en position fermée par un ressort (23) logé entre le fond du pot de temporisation (8) et la partie inférieure (22a) de l'organe de décompression (22), l'organe de décompression (22) comprenant au moins une ouverture radiale (22c) configurée pour mettre en communication la partie supérieure (22b) creuse de l'organe de décompression (22) avec la partie inférieure du pot de temporisation (8) lorsque le clapet auxiliaire (21) est ouvert ; et
- une rondelle épaulée (24) dont la surface supérieure fait office de clapet secondaire, servant de butée pour l'extrémité inférieure de la tige de commande (3) faisant office de siège secondaire, ladite rondelle épaulée (24) étant disposée autour de la partie supérieure (22b) de l'organe de décompression (22), des moyens de solidarisation en translation étant ménagés entre ladite rondelle épaulée (24) et la partie supérieure (22b) de l'organe de décompression (22), ladite rondelle épaulée (24) comprenant une jupe (24a) pénétrant de façon étanche dans un orifice central (19b) ménagé axialement dans le clapet principal (19c), la face supérieure de ladite rondelle épaulée (24) étant configurée pour être en contact avec l'extrémité inférieure de la tige de commande (3) lors d'un appui sur l'extrémité supérieure de la tige de commande (3) pour fermer le clapet secondaire, un jeu axial (24b) étant ménagé entre l'extrémité inférieure de la jupe (24a) de ladite rondelle épaulée (24) et la partie inférieure (22a) de l'organe de décompression (22) pour permettre un passage d'eau lorsque le clapet auxiliaire (21) est en position ouverte, de cette manière, depuis une position de repos dans laquelle le clapet principal (19c) et le clapet auxiliaire (21) sont fermés, un appui sur l'extrémité supérieure de la tige de commande (3) se traduit tout d'abord par un déplacement vers le bas de la tige de commande (3), puis par un déplacement simultané vers le bas de la tige de commande (3), de la rondelle épaulée (24) et de l'organe de décompression (22) provoquant l'ouverture du clapet auxiliaire (21), l'eau contenue dans la partie inférieure du pot de temporisation (8) pouvant alors librement s'écouler vers l'intérieur de la tige de commande (3) par le jeu axial (24b) ménagé entre la partie inférieure (22a) de l'organe de décompression (22) et la rondelle épaulée (24), puis par l'ouverture radiale (22c) de l'organe de décompression (22) et l'intérieur de la partie supérieure (22b) de l'organe de décompression (22), le déplacement simultané de la tige de commande (3), de l'organe de décompression (22) et du piston de temporisation (18) provoquant l'ouverture du clapet principal (19c).

2. - Cartouche à fermeture automatique temporisée (1) selon la revendication 1, **caractérisée par le fait que** l'entraîneur (9a) comporte à sa partie inférieure la jupe (20) qui est le siège principal du robinet, ledit entraîneur (9a) comprenant une partie supérieure (10) qui pénètre dans ladite première partie supérieure (9b), la partie inférieure de la tige de commande (3) comportant au moins une cannelure mâle (12) qui coopère avec des cannelures femelles ménagées dans une collerette (13) formée dans la partie supérieure de l'entraîneur (9a), un joint d'étanchéité (14) étant disposé à l'intérieur de l'entretoise supérieure entre la tige de commande (3) et l'entraîneur (9a).

3. - Cartouche à fermeture automatique temporisée (1) selon la revendication 1 ou la revendication 2, **caractérisée par le fait que** la surface latérale intérieure de la partie inférieure de la tige de commande (3) comprend au moins une cannelure longitudinale (35) pour laisser passer le débit principal de fluide.

4. - Cartouche à fermeture automatique temporisée (1) selon l'une des revendications 1 à 3, **caractérisée par le fait que** la surface supérieure de la rondelle épaulée (24) est configurée pour empêcher le passage d'eau lorsque la rondelle épaulée (24) est en contact avec l'extrémité inférieure de la tige de commande (3).

5. - Cartouche à fermeture automatique temporisée (1) selon l'une des revendications 1 à 3, **caractérisée par le fait que** la surface supérieure de la rondelle épaulée (24) comporte au moins une cannelure (50) en regard de l'extrémité inférieure de la tige de commande (3), ladite au moins une cannelure (50) étant configurée pour permettre le passage d'eau dès l'ouverture du clapet principal (19c).

6. - Cartouche à fermeture automatique temporisée (1) selon la revendication 2 ou l'une des revendications 3 à 5 en dépendance de la revendication 2, **caractérisée par le fait que** l'extrémité inférieure de la tige de commande (3) comporte une gorge dans laquelle est disposé un anneau d'arrêt (28) apte à venir en appui, dans la position de repos, contre la partie inférieure de la collerette (13) formée dans l'entraîneur (9a).

7. - Cartouche à fermeture automatique temporisée (1) selon l'une des revendications 1 à 6, **caractérisée par le fait que** la tige de commande (3) comporte, à l'intérieur de celle-ci, une vis de réglage de débit (29) disposée au niveau de l'au moins une ouverture radiale de sortie d'eau (3c).

8. - Cartouche à fermeture automatique temporisée (1) selon l'une des revendications 1 à 7, **caractérisée par le fait que** la surface extérieure du fond du pot de temporisation (8) comprend un système d'obturation (8b) configuré pour coopérer avec l'arrivée d'eau froide (42) et l'arrivée d'eau chaude (43) de façon à mitiger la température de l'eau en fonction de la position angulaire du pot de temporisation (8) définie par la position angulaire de la tige de commande (3).

9. - Cartouche à fermeture automatique temporisée (1) selon l'une des revendications 1 à 7, **caractérisée par le fait que** l'au moins une ouverture d'entrée d'eau (8a) est une fente formée à la périphérie du pot de temporisation (8), la hauteur de ladite fente étant continûment croissante puis décroissante, ladite fente étant positionnée en regard de l'arrivée d'eau froide (42) et de l'arrivée d'eau chaude (43) de façon à mitiger la température de l'eau en fonction de la position angulaire du pot de temporisation (8) définie par la position angulaire de la tige de commande (3).

10. - Robinet mitigeur (40) pour douche ou lavabo intégrant une cartouche à fermeture automatique temporisée (1) selon l'une des revendications 1 à 9.

## Patentansprüche

1. - Kartusche mit zeitgesteuertem automatischem Verschluss (1) für einen Mischerhahn (40) wie ein Mischerhahn für eine Dusche oder ein Waschbecken, **dadurch gekennzeichnet, dass** sie umfasst:
- eine hohle Nabe (2), die eine hohle Steuerstange (3) mit Rückstellfeder (4) aufnimmt, wobei das obere Ende der Steuerstange (3) ausgelegt ist, um ein Hahn-Regelungsrad (45) aufzunehmen;
- ein Timerkästchen (8), das ausgelegt ist, um mit einem Kaltwasserzulauf (42) und mit einem Warmwasserzulauf (43) über mindestens eine Wassereinlassöffnung (8a) verbunden zu sein;
- einen Abstandshalter (9), der zwischen der hohlen Nabe (2) und dem Timerkästchen (8) zwischengestellt ist, wobei sich die Steuerstange (3) durch den Abstandshalter (9) erstreckt, um an seinem unteren Ende im Timerkästchen (8) auszumünden und ausgelegt ist, um im Abstandshalter (9) zu gleiten, wobei mindestens eine Wasserauslassöffnung (3c) in der Seitenwand der Steuerstange (3) im Bereich des Abstandshalters (9) eingerichtet ist, wobei mindestens ein seitlicher Durchgang (9c) im Abstandshalter (9) eingerichtet ist, um ein Fließen von Wasser vom Inneren der hohlen Steuerstange (3) zu einem Wasserauslass (44) des Mischerhahns (40) zu erlauben, wobei der Abstandshalter (9) einen ersten oberen Teil (9b) aufweist, in dem die Steuerstange (3) imstande ist zu gleiten und gemäß ihrer Längsachse zu schwenken, wobei der erste obere Teil (9b) ausgelegt ist, um in dem Hahnkörper durch eine hohle Kappe und einen Gewindering (47) gehalten zu werden, der ausgelegt ist, um im Hahnkörper eingeschraubt zu sein, wobei der Gewindering (47) auf der hohlen Kappe in Abstützung kommt, die den ersten oberen Teil (9b) umgibt, wobei die hohle Kappe ausgelegt ist, um mit dem Hahnkörper rotatorisch fest verbunden zu werden, wobei der Abstandshalter (9) ferner einen zweiten unteren Teil vom Typ Mitnehmer (9a) aufweist, der mit der Steuerstange (3) rotatorisch fest verbunden ist, wobei der Mitnehmer (9a) ebenfalls mit dem Timerkästchen (8) rotatorisch fest verbunden ist; und
- einen Timerkolben (18), der in dem Timerkästchen (8) angeordnet ist und ausgelegt, um ein Hauptventil (19c) zu öffnen und zu schließen, das sich im Bereich des oberen Teils des Timerkästchens (8) befindet;
- wobei das Hauptventil (19c) von der oberen Fläche einer Lippendichtung (19) gebildet ist, die auf dem Timerkolben (18) angeordnet ist und deren Lippe (19a) auf der inneren seitlichen Oberfläche des Timerkästchens (8) anliegt, wobei der dem Hauptventil (19c) zugeordnete Hauptsitz von einer Schürze (20) am unteren Ende des Abstandshalters (9) gebildet ist, wobei das untere Ende der Steuerstange (3) ausgelegt ist, um eine Wasserzirkulation ab dem Timerkästchen (8) zu mindestens einer Wasserauslassöffnung (3c) der Steuerstange (3) zu erlauben;
- ein Hilfsventil (21), das vom unteren Teil (22a) eines Dekompressionsorgans (22) getragen wird, wobei der untere Teil (22a) des Dekompressionsorgans (22) unter dem Timerkolben (18) angeordnet ist und der obere Teil (22b) des Dekompressionsorgans (22) hohl ist, den Timerkolben (18) durchquert und sich axial im unteren Teil der hohlen Steuerstange (3) erstreckt, wobei der dem Hilfsventil (21) zugeordnete Hilfssitz (18a) im unteren Teil des Timerkolbens (18) gebildet ist, wobei das Hilfsventil (21) ausgelegt ist, um von einer zwischen dem Boden des Timerkästchens (8) und dem unteren Teil (22a) des Dekompressionsorgans (22) untergebrachten Feder (23) in geschlossene Position zurückgestellt zu werden, wobei das Dekompressionsorgan (22) mindestens eine radiale Öffnung (22c) umfasst, die ausgelegt ist, um den hohlen oberen Teil (22b) des Dekompressionsorgans (22) mit dem unteren Teil des Timerkästchens (8) in Kommunikation zu versetzen, wenn das Hilfsventil (21) geöffnet ist; und
- eine Pass-Unterlegscheibe (24), deren obere Oberfläche als sekundäres Ventil fungiert, die für das untere Ende der Steuerstange (3) als Anschlag dient, das als sekundärer Sitz fungiert, wobei die Pass-Unterlegscheibe (24) um den oberen Teil (22b) des Dekompressionsorgans (22) angeordnet ist, wobei Mittel zur festen translatorischen Verbindung zwischen der Pass-Unterlegscheibe (24) und dem oberen Teil (22b) des Dekompressionsorgans (22) eingerichtet sind, wobei die Pass-Unterlegscheibe (24) eine Schürze (24a) umfasst, die dicht in ein zentrales Loch (19b) eindringt, das axial im Hauptventil (19c) eingerichtet ist, wobei die obere Fläche der Pass-Unterlegscheibe (24) ausgelegt ist, um mit dem unteren Ende der Steuerstange (3) bei einer Abstützung auf dem oberen Ende der Steuerstange (3) im Kontakt zu sein, um das sekundäre Ventil zu schließen, wobei ein axiales Spiel (24b) zwischen dem unteren Ende der Schürze (24a) der Pass-Unterlegscheibe (24) und dem unteren Teil (22a) des Dekompressionsorgans (22) eingerichtet ist, um einen Wasserdurchgang zu erlauben, wenn das Hilfsventil (21) in geöffneter Position ist, so dass auf diese Weise ab einer Ruhestellung, in welcher das Hauptventil (19c) und das Hilfsventil (21) geschlossen sind, ein Druck auf das obere Ende der Steuerstange (3) zunächst zu einer Verlagerung der Steuerstange (3) nach unten führt, dann durch eine gleichzeitige Verlagerung der Steuerstange (3), der Pass-Unterlegscheibe (24) und des Dekompressionsorgans (22) nach unten das Öffnen des Hilfsventils (21) bewirkt wird, so dass das im unteren Teil des Timerkästchens (8) enthaltene Wasser dann durch das axiale Spiel (24b), das zwischen dem unteren Teil (22a) des Dekompressionsorgans (22) und der Pass-Unterlegscheibe (24) eingerichtet ist, dann durch die radiale Öffnung (22c) des Dekompressionsorgans (22) und das Innere des oberen Teils (22b) des Dekompressionsorgans (22) frei zum Inneren der Steuerstange (3) fließen kann, wobei die gleichzeitige Verlagerung der Steuerstange (3), des Dekompressionsorgans (22) und des Timerkolbens (18) das Öffnen des Hauptventils (19c) bewirkt.

2. - Kartusche mit zeitgesteuertem automatischem Verschluss (1) nach Anspruch 1, **dadurch gekennzeichnet, dass** der Mitnehmer (9a) an seinem unteren Teil die Schürze (20) aufweist, die der Hauptsitz des Hahns ist, wobei der Mitnehmer (9a) einen oberen Teil (10) umfasst, der in den ersten oberen Teil (9b) eindringt, wobei der untere Teil der Steuerstange (3) mindestens eine Wulst (12) aufweist, die mit weiblichen Rillen zusammenwirkt, die in einem Flansch (13) eingerichtet sind, der im oberen Teil des Mitnehmers (9a) ausgebildet ist, wobei eine Dichtung (14) im Inneren des oberen Abstandshalters zwischen der Steuerstange (3) und dem Mitnehmer (9a) angeordnet ist.

3. - Kartusche mit zeitgesteuertem automatischem Verschluss (1) nach Anspruch 1 oder Anspruch 2, **dadurch gekennzeichnet, dass** die innere seitliche Oberfläche des unteren Teils der Steuerstange (3) mindestens eine Längsrille (35) umfasst, um den Fluidhauptdurchfluss hindurchzulassen.

4. - Kartusche mit zeitgesteuertem automatischem Verschluss (1) nach einem der Ansprüche 1 bis 3, **dadurch gekennzeichnet, dass** die obere Oberfläche der Pass-Unterlegscheibe (24) ausgelegt ist, um den Wasserdurchgang zu verhindern, wenn die Pass-Unterlegscheibe (24) mit dem unteren Ende der Steuerstange (3) im Kontakt ist.

5. - Kartusche mit zeitgesteuertem automatischem Verschluss (1) nach einem der Ansprüche 1 bis 3, **dadurch gekennzeichnet, dass** die obere Oberfläche der Pass-Unterlegscheibe (24) mindestens eine Rille (50) aufweist, die dem unteren Ende der Steuerstange (3) zugewandt ist, wobei die mindestens eine Rille (50) ausgelegt ist, um den Wasserdurchgang ab dem Öffnen des Hauptventils (19c) zu erlauben.

6. - Kartusche mit zeitgesteuertem automatischem Verschluss (1) nach Anspruch 2 oder einem der Ansprüche 3 bis 5 in Abhängigkeit von Anspruch 2, **dadurch gekennzeichnet, dass** das untere Ende der Steuerstange (3) eine Nut aufweist, in der ein Anschlagring (28) angeordnet ist, der imstande ist, in der Ruhestellung gegen den unteren Teil des im Mitnehmer (9a) gebildeten Flanschs (13) in Abstützung zu kommen.

7. - Kartusche mit zeitgesteuertem automatischem Verschluss (1) nach einem der Ansprüche 1 bis 6, **dadurch gekennzeichnet, dass** die Steuerstange (3) im Inneren derselben eine Durchflussregulierungsschraube (29) aufweist, die im Bereich der mindestens einen radialen Wasserauslassöffnung (3c) angeordnet ist.

8. - Kartusche mit zeitgesteuertem automatischem Verschluss (1) nach einem der Ansprüche 1 bis 7, **dadurch gekennzeichnet, dass** die äußere Oberfläche des Bodens des Timerkästchens (8) ein Verschlusssystem (8b) umfasst, das ausgelegt ist, um mit dem Kaltwasserzulauf (42) und dem Warmwasserzulauf (43) derart zusammenzuwirken, dass die Temperatur des Wassers in Abhängigkeit von der Winkelposition des Timerkästchens (8), die von der Winkelposition der Steuerstange (3) festgelegt ist, gemischt wird.

9. - Kartusche mit zeitgesteuertem automatischem Verschluss (1) nach einem der Ansprüche 1 bis 7, **dadurch gekennzeichnet, dass** die mindestens eine Wassereinlassöffnung (8a) ein Schlitz ist, der an der Peripherie des Timerkästchens (8) gebildet ist, wobei die Höhe des Schlitzes ununterbrochen zunimmt, dann abnimmt, wobei der Schlitz dem Kaltwasserzulauf (42) und dem Warmwasserzulauf (43) derart zugewandt ist, dass die Temperatur des Wassers in Abhängigkeit von der Winkelposition des Timerkästchens (8), die von der Winkelposition der Steuerstange (3) festgelegt ist, gemischt wird.

10. - Mischerhahn (40) für eine Dusche oder ein Waschbecken, der eine Kartusche mit zeitgesteuertem automatischem Verschluss (1) nach einem der Ansprüche 1 bis 9 integriert.

## Claims

1. - A timed automatic closing cartridge (1) for a mixer tap (40), such as a mixer tap for a shower or washbasin, **characterized in that** it comprises :
- a hollow hub (2) receiving a hollow control rod (3) with a return spring (4), the upper end of the control rod (3) being configured to receive a tap control wheel handle(45) ;
- a timing box (8) configured to be connected to a cold water inlet (42) and a hot water inlet (43) via at least one water inlet opening (8a);
- a spacer (9) interposed between the hollow hub (2) and the timing box (8), the control rod (3) extending through the spacer (9) to open up at its lower end into the timing box (8) and being configured to slide in said spacer (9), at least one water outlet opening (3c) being provided in the side wall of the control rod (3) at the spacer's (9) level, at least one lateral passage (9c) being provided in said spacer (9) to allow a water flow from the interior of the hollow control rod (3) to a water outlet (44) of the mixer tap (40), the spacer (9) comprising a first upper part (9b) in which the control rod (3) is capable of sliding and pivoting along its longitudinal axis, said first upper part (9b) being configured to be held in the tap body by a hollow cap and a threaded ring (47) configured to be screwed into said tap body, said threaded ring (47) abutting on the hollow cap that envelops the first upper part (9b), said hollow cap being configured to be made integral in rotation with the tap body, the spacer (9) further comprising a second lower part of driver-type (9a) integral in rotation with the control rod (3), said driver (9a) also being integral in rotation with the timing box (8) and ;
- a timing piston (18) disposed in the timing box (8) and configured to open and close a main valve (19c) located at the top of the timing box (8);
- said main valve (19c) being constituted by the upper face of a lip seal (19) disposed on the timing piston (18) and whose lip (19a) is applied to the inner lateral surface of the timing box (8), the main seat associated with the main valve (19c) being formed by a skirt (20) at the lower end of the spacer (9), the lower end of the control rod (3) being configured to allow a water flow from the timing box (8) to the at least one water outlet opening (3c) of the control rod (3);
- an auxiliary valve (21) carried by the lower part (22a) of a pressure relief member (22), said lower part (22a) of the pressure relief member (22) being arranged below the timing piston (18) and the upper part (22b) of the pressure relief member (22) being hollow, passing through the timing piston (18) and axially extending in the lower part of the hollow control rod (3), the auxiliary seat (18a) associated with the auxiliary valve (21) being formed in the inner part of the timing piston (18), said auxiliary valve (21) being configured to be returned to the closed position by a spring (23) housed between the bottom of the timing box (8) and the lower part (22a) of the pressure relief member (22), the pressure relief member (22) comprising at least one radial opening (22c) configured to put the hollow upper part (22b) of the pressure relief member (22) into communication with the lower part of the timing box (8) when the auxiliary valve (21) is open ; and
- a shoulder washer (24), the upper surface of which acts as a secondary valve, serving as a stop for the lower end of the control rod (3) acting as a secondary seat, said shoulder washer (24) being arranged around the upper part (22b) of the pressure relief member (22), means for securing in translation being provided between the said shoulder washer (24) and the upper part (22b) of the pressure relief member (22), the said shoulder washer (24) comprising a skirt (24a) penetrating in a sealed manner into a central orifice (19b) provided axially in the main valve (19c), the upper face of said shoulder washer (24) being configured to contact the lower end of the control rod (3) when the upper end of the control rod (3) is pressed to close the secondary valve, an axial clearance (24b) being provided between the lower end of the skirt (24a) of said shoulder washer (24) and the lower part (22a) of the pressure relief member (22) to allow a water flow when the auxiliary valve (21) is in open position, in this way, from a rest position in which the main valve (19c) and the auxiliary valve (21) are closed, pressing the upper end of the control rod (3) results first in a downward movement of the control rod (3) and then in a simultaneous downward movement of the control rod (3), the shoulder washer (24) and the pressure relief member (22), causing the auxiliary valve (21) to open, the water contained in the lower part of the timing box (3) can then freely flow towards the interior of the control rod (3) through the axial clearance (24b) provided between the lower part (22a) of the pressure relief member (22) and the shoulder washer (24), then through the radial opening (22c) of the pressure relief member (22) and into the upper part (22b) of the pressure relief member (22), the simultaneous movement of the control rod (3), the pressure relief member (22) and the timing piston (18) causing the main valve (19c) to open.

2. - The timed automatic closing cartridge (1) according to claim 1, **characterized in that** the driver (9a) comprises, at its lower part, the skirt (20) which is the main seat of the tap, the said driver (9a) comprising an upper part (10) which penetrates the said first upper part (9b), the lower part of the control rod (3) having at least one male spline (12) which cooperates with female splines provided in a collar (13) formed in the upper part of the driver (9a), a seal (14) being provided inside the upper spacer between the control rod (3) and the driver (9a).

3. - The timed automatic closing cartridge (1) according to claim 1 or claim 2, **characterized in that** the inner lateral surface of the lower part of the control rod (3) comprises at least one longitudinal spline (35) for letting the main fluid flow through.

4. - The timed automatic closing cartridge (1) according to any of claims 1 to 3, **characterized in that** the upper surface of the shoulder washer (24) is configured to prevent the passage of water when the shoulder washer (24) is in contact with the lower end of the control rod (3) .

5. - The timed automatic closing cartridge (1) according to any of claims 1 to 3, **characterized in that** the upper surface of the shoulder washer (24) comprises at least one spline (50) opposite the lower end of the control rod (3), said at least one spline (50) being configured to allow the water flow as soon as the main valve (19c) is opened.

6. - The timed automatic closing cartridge (1) according to claim 2 or any of claims 3 to 5, depending on claim 2, **characterized in that** the lower end of the control rod (3) comprises a groove in which is arranged a stop ring (28) capable of abutting, in the rest position, against the lower part of the collar (13) formed in the driver (9a).

7. - The timed automatic closing cartridge (1) according to any of claims 1 to 6, **characterized in that** the control rod (3) is provided therein with a flow rate adjustment screw (29) arranged at the at least one radial water outlet opening (3c).

8. - The timed automatic closing cartridge (1) according to any of claims 1 to 7, **characterized in that** the outer surface of the bottom of the timing box (8) comprises a shut-off system (8b) configured to cooperate with the cold water inlet (42) and the hot water inlet (43) so as to mitigate the temperature of the water according to the angular position of the timing box (8) defined by the angular position of the control rod (3).

9. - The timed automatic closing cartridge (1) according to any of claims 1 to 7, **characterized in that** the at least one water inlet opening (8a) is a slot formed at the periphery of the timing box (8), the height of said slot being continuously increasing then decreasing, said slot being positioned opposite the cold water inlet (42) and the hot water inlet (43) so as to mitigate the temperature of the water according to the angular position of the timing box (8) defined by the angular position of the control rod (3).

10. - A mixer tap (40) for a shower or washbasin incorporating a timed automatic closing cartridge (1) according to any of claims 1 to 9.
